Europäisches Patentamt

European Patent Office

Office européen des brevets

(11) Veröffentlichungsnummer: **0 491 154 A1**

## (12) EUROPÄISCHE PATENTANMELDUNG

(21) Anmeldenummer: **91119126.0**

(22) Anmeldetag: **11.11.91**

(51) Int. Cl.⁵: **B23B** 31/00, B23B 51/10

(30) Priorität: **19.12.90 DE 4040774**

(43) Veröffentlichungstag der Anmeldung:
**24.06.92 Patentblatt 92/26**

(84) Benannte Vertragsstaaten:
**AT BE CH DE DK ES FR GB IT LI LU NL SE**

(71) Anmelder: **SFS Stadler Holding AG**
**Nefenstrasse 30**
**CH-9435 Heerbrugg(CH)**

(72) Erfinder: **Patsch, Werner**
**Rüfestrasse 13**
**FL-9490 Vaduz(FI)**
Erfinder: **Göldi, Michael**
**Obergasse 18**
**CH-9450 Altstätten(CH)**

(54) **Bohrer.**

(57) Bei einem Bohrer (1) sind eine Bohrspitze (2), ein Bohrerschaft (3) sowie ein in eine Aufnahmeöffnung eines Antriebsteils einsetzbarer Antriebsabschnitt vorgesehen. Der Antriebsabschnitt weist einen gegenüber dem Bohrerschaft (3) vergrösserten Kopf (4) auf, welcher wenigstens eine zur Bohrerachse parallel verlaufende Abflachung (16) zur Drehmitnahme in einem Antriebsteil aufweist. Der unmittelbar an den Kopf (4) folgende Schaftabschnitt (21) des Bohrers (4) ist zur achsgenauen Ausrichtung desselben in einem Antriebsteil ausgeführt. Die einander in axialer Richtung abgewandten Enden (14, 15) des Kopfes (4) sind als Anschlagflächen zur axialen Bewegungsbegrenzung des Bohrers 1 in einer Aufnahmeöffnung eines Antriebsteils ausgebildet.

Fig.1

EP 0 491 154 A1

Die Erfindung betrifft einen Bohrer mit einer Bohrspitze, einem Bohrerschaft sowie einem in eine Aufnahmeöffnung eines Antriebsteils einsetzbaren Antriebsabschnitt, welcher wenigstens eine zur Bohrerachse zumindest annähernd parallel verlaufende Abflachung zur Drehmitnahme in einem Antriebsteil aufweist.

Der Antriebsabschnitt eines Bohrers ist bereits in vielen Ausführungsvarianten gestaltet worden. In der Regel ist dieser Antriebsabschnitt durchmessergleich mit der Bohrspitze als glatter Schaft ausgeführt, wobei dieser Schaft durch radial anpressbare Backen im Antriebsteil gehalten wird. Es sind aber auch bereits Bohrer bekannt geworden, deren Antriebsabschnitt einen grösseren Durchmesser aufweisen als der Bohrabschnitt, wobei in diesem Antriebsabschnitt achsparallel Nuten bzw. Einschnitte vorgesehen sind, in welche z.B. federbelastete Verriegelungsstücke eingreifen. Dabei ist entweder eine entsprechende Materialanhäufung im Antriebsabschnitt des Bohrers notwendig, oder aber es ergibt sich durch diese Rillen eine Querschnittsschwächung. Solcher Art ausgebildete Antriebsabschnitte müssen in axialer Richtung entsprechend lang sein, da nur diese Antriebsabschnitte die achsgleiche Ausrichtung des Bohrers mit dem Antriebsteil bewirken.

Ein Bohrer muss in den Antriebsteilen so gehalten sein, dass er einerseits achsgenau ausgerichtet ist und andererseits eine ordnungsgemässe Drehmitnahme gewährleistet.

Bei einem aus zwei Teilen zusammengesetzten, bekannten Schneidwerkzeug (DE-C-670 370) sind am einen Endbereich des Bohrers zwei einander radial gegenüberliegende Einschnitte vorgesehen, in weiche Leisten einer zweiteiligen Hülse eingreifen.

Diese Hülse ist an ihrer Aussenseite leicht kegelig ausgebildet. Über diese eine Hülse wird eine zweite, innen leicht kegelige Hülse geschoben, so dass sich die innere, zweiteilige Hülse an den Bohrerschaft anpressen kann. Es ist also auch bei dieser Ausführung ein radiales Einspannen des Bohrerschaftes notwendig, um die erforderliche Ausrichtung desselben zum Schaft zu erzielen.

Die vorliegende Erfindung hat sich zur Aufgabe gestellt, einen Bohrer der eingangs genannten Art zu schaffen, bei welchem die Forderungen nach achsgenauer Ausrichtung und ordnungsgemässer Drehmitnahme bezüglich eines Antriebsteils gewährleistet sind, wobei diese Forderungen in konstruktiv einfacher Weise ohne radiale Spannwirkung bewerkstelligt werden sollen.

Erfindungsgemäss wird dazu vorgeschlagen, dass der Antriebsabschnitt einen gegenüber dem Bohrerschaft vergrösserten Kopf aufweist und der unmittelbar auf den Kopf folgende und im Querschnitt gegenüber dem Kopfquerschnitt kleinere Schaftabschnitt zur achsgenauen Ausrichtung desselben in einem Antriebsteil ausgeführt ist, und dass die einander in axialer Richtung abgewandten Enden des gegenüber dem Bohrerschaft vergrösserten Kopfes als Anschlagflächen zur axialen Bewegungsbegrenzung des Bohrers in einer Aufnahmeöffnung eines Antriebsteils ausgebildet sind.

Durch die erfindungsgemässe Konstruktion eines Bohrers kann ohne grosse Materialanhäufung eine einfache Drehmitnahme gewährleistet werden, da zur achsgenauen Ausrichtung des Bohrers der Schaftabschnitt desselben herangezogen werden kann. Der vergrösserte Kopf ist daher einerseits für die Drehmitnahme des Bohrers und andererseits zur Fixierung des Bohrers in axialer Richtung gegenüber einem Antriebsteil vorgesehen. Zur achsgenauen Ausrichtung des Bohrers dient der Bohrerschaft selbst.

Die vorliegende Erfindung hebt sich gegenüber der bekannten Ausführung (DE-C-670 370) gerade dadurch ab, dass der Antriebsabschnitt eben einen gegenüber dem Bohrerschaft vergrösserten Kopf aufweist. Ein bekannter Bohrer könnte auch nicht auf die erfindungsgemässe Art und Weise in einem Antriebsabschnitt eingesetzt werden, denn bei dieser bekannten Ausführung muss ein Einspannen auf jeden Fall immer in radialer Richtung erfolgen, und es müssen in die ausgefrästen Aussparungen Leisten einer zweiteiligen Hülse in radialer Richtung eingreifen. Es ist aber gerade eine Besonderheit der vorliegenden Erfindung, bei einem Bohrer einen Kopf vorzusehen, welcher in seinem Querschnitt grösser ist als der Querschnitt des Bohrerschaftes.

Durch diese konstruktiv einfache Ausbildung eines Bohrers ist auch die Befestigung desselben an einem Antriebsteil sehr einfach zu bewerkstelligen, da nur ein annähernd hülsenförmiger Befestigungsteil vorhanden sein muss, welcher eine Durchgangsbohrung für den Schaft und eine auf die Kopfform des Bohrers angepasste Öffnung aufweisen muss. Es ist daher kein Einspannen notwendig und ausserdem sind keine axial verschiebbaren Verriegelungsstücke und somit einerseits verlierbare und andererseits durch den Gebrauch abnützbare Teile notwendig. Auch der Bohrer selbst hat dadurch eine wesentlich verlängerte Lebensdauer.

Es gibt sicher eine Reihe von Ausführungen von Bohrern, welche im Einspannbereich verschiedene Ausführungskonstruktionen aufweisen, u.a. auch Abflachungen für die Drehmitnahme (z.B. US-A-4 605 348), doch sind diese Bohrer immer dafür vorgesehen, um in axialer Richtung von vorne in ein Bohrfutter oder eine entsprechende Bohrfutterhalterung eingeschoben zu werden. Wenn aber am Bohrerschaft ein vergrösserter Kopf vorgesehen ist, dann kann ein solcher Bohrer gar nicht in übliche Bohrfutter eingesetzt werden.

Bei einer anderen bekannten Ausführung (DE-A-30 33 322) ist wohl ein im Querschnitt quadratischer Endabschnitt eines Bohrers vorgesehen, doch kann dieser Endabschnitt nicht als Kopf des Bohrers bezeichnet werden, und ausserdem ist der Querschnitt dieses Endbereiches sogar noch kleiner als der Querschnitt des Bohrerschaftes.

Anstelle nur einer einzigen Abflachung am Kopf des Bohrers ist es vorteilhaft, wenn der Kopf des Bohrers im Querschnitt mehreckig ausgeführt ist, wobei vorteilhaft ein quadratischer Querschnitt eingesetzt wird. Es sind dann zwischen dem Bohrer und dem Antriebsteil mehrere Mitnahmeflächen vorhanden, die eine ordnungsgemässe Drehmitnahme ohne ein Verkanten des Kopfes im Antriebsteil ermöglichen.

Um eine Leichtgängigkeit des Kopfes in einem Antriebsteil zu ermöglichen, ist es zweckmässig, wenn die an die Abflachungen am Kopf anschliessenden Ecken abgerundet ausgeführt sind.

Weiters wird vorgeschlagen, dass die Höhe des Kopfes in Achsrichtung gemessen kleiner ist als die Aussenabmessungen in radialer Richtung gemessen. Es ist daraus ersichtlich, dass ein erfindungsgemäss ausgebildeter Kopf an einem Bohrer nur eine sehr kleine Materialanhäufung benötigt, um eine ordnungsgemässe Drehmitnahme und eine axiale Sicherung eines Bohrers in einem Antriebsteil zu ermöglichen.

Ein Ausführungsbeispiel der Erfindung wird in der nachstehenden Beschreibung anhand der Zeichnung näher erläutert. Es zeigen:

Fig. 1    eine Seitenansicht eines Bohrers;

Fig. 2    einen Schnitt nach der Linie II-II in Fig. 1;

Fig. 3    geschnitten dargestellt einen hülsenförmigen Halter für den Bohrer;

Fig. 4    eine Einsatzmöglichkeit für einen erfindungsgemäss ausgeführten Bohrer mit einer besonderen Ausbildung eines Halters.

Der Bohrer 1 besteht im wesentlichen aus einer Bohrspitze 2, einem Bohrerschaft 3 und einem gegenüber dem Bohrerschaft 3 vergrösserten Kopf 4, welcher einen in einen Antriebsteil einsetzbaren Antriebsabschnitt bildet.

Der Kopf 4 weist wenigstens eine zur Bohrerachse parallel verlaufende Abflachung 16 auf, welche zur Drehmitnahme in einem Antriebsteil dient. Bei der gezeigten Ausführungsform ist der Kopf 4 im Querschnitt quadratisch ausgeführt, so dass vier solcher Abflachungen 16 vorgesehen sind. Im Rahmen der Erfindung ist es möglich, den Kopf 4 des Bohrers 1 im Querschnitt in jeder beliebigen Art mehreckig auszuführen. An sich wäre auch eine unrunde, also z.B. ellipsenförmige Querschnittsform des Kopfes 4 denkbar, doch sind dann die Herstellung und die Passung zum entsprechenden Antriebsteil wesentlich schwieriger zu bewerkstelligen.

Vorteilhaft sind die an die Abflachungen 16 am Kopf 4 anschliessenden Ecken abgerundet ausgeführt. Bei der bevorzugten, in der Zeichnung dargestellten Ausführungsform ist die Höhe des Kopfes 4 in Achsrichtung gemessen kleiner als die Aussenabmessungen in radialer Richtung gemessen. Es ist also in bezug auf die Länge bzw. Grösse des Bohrers 1 ein relativ kleiner Kopf gegeben und damit eine relativ geringe Materialanhäufung.

Der unmittelbar an den Kopf 4 anschliessende Schaftabschnitt 21 des Bohrers 1 ist zur achsgenauen Ausrichtung desselben in einem Antriebsteil ausgeführt. Es werden somit zum Halten des Bohrers in einem Antriebsteil der relativ kleine Kopf 4 und auch der an den Kopf 4 anschliessende Schaftabschnitt 21 herangezogen. Daher sind eine ordnungsgemässe Drehmitnahme und eine ordnungsgemässe axiale Ausrichtung des Bohrers 1 gewährleistet.

Die einander in axialer Richtung abgewandten Enden 14 und 15 des Kopfes 4 sind als Anschlagflächen zur axialen Bewegungsbegrenzung des Bohrers 1 in einer Aufnahmeöffnung des Antriebsteils ausgebildet. Es ist daher durch eine einfache konstruktive Massnahme zusätzlich auch die axiale Sicherung des Bohrers 1 gewährleistet.

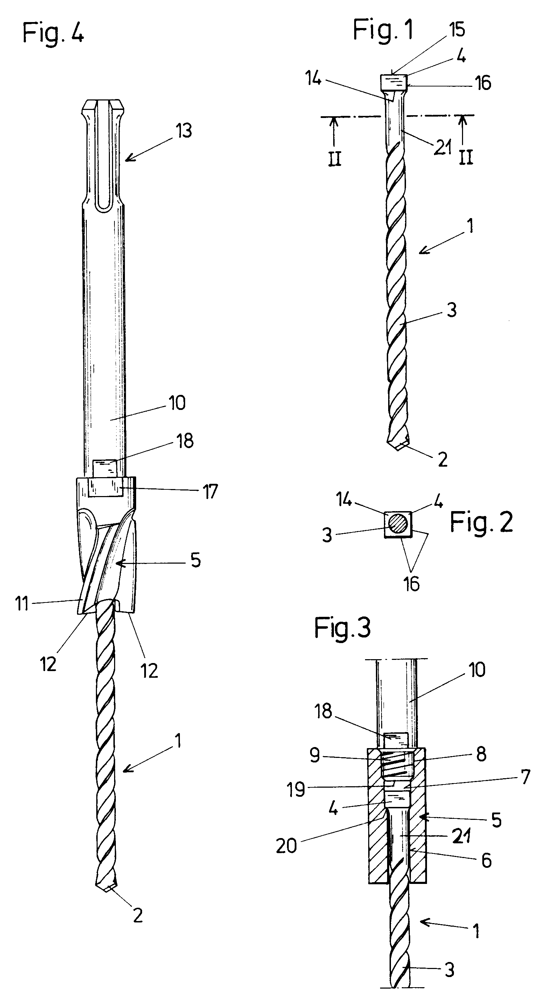

Für den Einsatz eines erfindungsgemässen Bohrers kann ein spezieller Halter 5 eingesetzt werden, welcher im Schnitt in Fig. 3 ersichtlich ist. Es ist hier ein hülsenförmiger Halter 5 vorgesehen, welcher an seinem einen Endbereich eine dem Bohrerschaft 3 bzw. dem Schaftabschnitt 21 entsprechende Bohrung 6 aufweist. An seinem anderen Endbereich ist diese Bohrung 6 zu einer Öffnung 7 erweitert, in welcher der Kopf 4 des Bohrers 1 verdrehsicher und gegebenenfalls axial verschiebbar gehalten ist. Die Öffnung 7 im Halter 5 entspricht im Querschnitt dem Querschnitt des Kopfes 4, so dass der Bohrer 1 gegenüber diesem Halter 5 verdrehsicher ist. Durch die relativ lange Bohrung 6 ist der Schaftabschnitt 21 des Bohrers 1 über einen relativ langen Bereich geführt, so dass bezüglich des Antriebsteils eine exakte axiale Ausrichtung des Bohrers 1 gewährleistet ist. Der hülsenförmige Halter 5 weist an seinem der Bohrung 6 abgewandten Ende eine Gewindebohrung 8 auf, in welche ein Gewindezapfen 9 eines Antriebsteils 10 eindrehbar ist. Durch entsprechende Schlüsselangriffsstellen 17 und 18 am Antriebsteil 10 und am Halter 5 ist eine feste Verbindung zwischen dem Halter 5 und dem Antriebsteil 10 gewährleistet.

Bei der in Fig. 3 dargestellten Ausführungsform ist der Bohrer 1 gegenüber dem Halter 5 begrenzt axial verschiebbar gehalten. Zu diesem Zweck ist die Öffnung 7 in axialer Richtung länger ausgebildet als die axiale Länge des Kopfes 4. Da der Schaftabschnitt 21 und auch der Kopf 4 nicht radial eingespannt sind, kann sich der Bohrer somit in der Öffnung 7 bewegen, so dass die einander in axialer Richtung abgewandten Enden 14 und 15 des Kopfes 4 als Anschlagflächen für die axiale Bewegungsbegrenzung dienen. Im Halter 5 ist am Übergang zwischen der Öffnung 7 und der Axialbohrung 6 die Schulter 20 als Anschlagfläche vorgesehen, und auf der gegenüberliegenden Seite bildet das freie Ende 19 des Gewindezapfens 9 des Antriebsteils 10 die Anschlagfläche.

Bei einer in axialer Richtung gesehen entsprechend kürzeren Öffnung 7 kann das Ende 19 des Gewindezapfens 9 auch direkt auf dem oberen Ende 15 des Kopfes 4 aufliegen, so dass der Bohrer 1 fest eingespannt wird. Um den gleichen Halter 5 sowohl bei begrenzt axialer Verschiebbarkeit als auch bei festem Einspannen verwenden zu können, ist es auch denkbar, zwischen dem Ende 19 und der Oberseite des Kopfes 4 einen entsprechenden Zwischenbolzen einzusetzen.

Bei allen diesen Ausführungen mit dem erfindungsgemässen Bohrer wird der Bohrer also von der Rückseite eines Halters 5 eingeführt, und es bedarf daher für den Bohrer 1 selbst keiner radialen Verspannung. Es ist eine ausreichende Drehmitnahme gewährleistet und auch die Möglichkeit geboten, bei Bedarf eine begrenzt axiale Verschiebbarkeit zu bewerkstelligen. Dies ist insbesondere dann notwendig, wenn der Bohrer als Schlagbohrwerkzeug eingesetzt wird. Bei einem Schlagbohrer ist es sinnvoll, eine geringfügige axiale Verschiebbarkeit des Bohrers vorzusehen.

Wie aus Fig. 4 ersichtlich ist, ist die Einsatzmöglichkeit eines erfindungsgemässen Bohrers vielfältig, insbesondere auch im Zusammenhang mit dem Halter 5. Bei der Ausführung nach Fig. 4 ist dieser Halter 5 als eine Art Bohrteil ausgeführt, der mit radial auskragenden Bohrschneiden 12 und daran anschliessenden Schneidstegen 11 versehen ist. Der Halter 5 kann hier also zugleich auch als zweiter Bohrerabschnitt ausgebildet werden, wenn eine abgestufte Bohrung mit auf den Bohrer 1 folgendem grösserem Durchmesser notwendig ist. Dieser Fig. 4 ist ebenfalls zu entnehmen, dass der Antriebsteil 10 auch in eine handelsübliche Aufnahme an einer Bohrmaschine eingesetzt werden kann. Es ist aber auch möglich, dass der Halter 5 direkt in eine Bohrmaschine eingesetzt oder eben auf einen Gewindezapfen einer Bohrmaschine aufgedreht wird.

**Patentansprüche**

1. Bohrer mit einer Bohrspitze, einem Bohrerschaft sowie einem in eine Aufnahmeöffnung eines Antriebsteils einsetzbaren Antriebsabschnitt, welcher wenigstens eine zur Bohrerachse zumindest annähernd parallel verlaufende Abflachung zur Drehmitnahme in einem Antriebsteil aufweist, **dadurch gekennzeichnet,** dass der Antriebsabschnitt einen gegenüber dem Bohrerschaft (3, 21) vergrösserten Kopf (4) aufweist und der unmittelbar auf den Kopf (4) folgende und im Querschnitt gegenüber dem Kopfquerschnitt kleinere Schaftabschnitt zur achsgenauen Ausrichtung desselben in einem Antriebsteil ausgeführt ist, und dass die einander in axialer Richtung abgewandten Enden (14, 15) des gegenüber dem Bohrerschaft (3, 21) vergrösserten Kopfes (4) als Anschlagflächen zur axialen Bewegungsbegrenzung des Bohrers (1) in einer Aufnahmeöffnung eines Antriebsteils ausgebildet sind.

2. Bohrer nach Anspruch 1, dadurch gekennzeichnet, dass der Kopf (4) des Bohrers (1) im Querschnitt mehreckig ausgeführt ist.

3. Bohrer nach den Ansprüchen 1 und 2, dadurch gekennzeichnet, dass der Kopf (4) im Querschnitt quadratisch ausgeführt ist.

4. Bohrer nach einem der Ansprüche 1 bis 3, dadurch gekennzeichnet, dass die an die Abflachungen (16) am Kopf (4) anschliessenden Ecken abgerundet ausgeführt sind.

5. Bohrer nach Anspruch 1 oder einem der vorhergehenden Ansprüche, dadurch gekennzeichnet, dass die Höhe des Kopfes (4) in Achsrichtung gemessen kleiner ist als die Aussenabmessungen in radialer Richtung gemessen.

Fig. 4

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 136 347 (LINQUIST) | 1-3 | B23B31/00 |
| A | * Spalte 1, Zeile 62 - Spalte 2, Zeile 1; Abbildungen 1-3 * | 5 | B23B51/10 |
| | --- | | |
| A | US-A-1 859 202 (EMMONS) * Seite 1, Zeile 56 - Zeile 65; Abbildung 1 * | 1,2,4 | |
| | --- | | |
| A | DE-A-680 914 (MOSSDORF) | | |
| | ----- | | |

|  |
|---|
| **RECHERCHIERTE SACHGEBIETE (Int. Cl.5)** |
| B23B |

Der vorliegende Recherchenbericht wurde für alle Patentansprüche erstellt

| Recherchenort | Abschlußdatum der Recherche | Prüfer |
|---|---|---|
| DEN HAAG | 31 MAERZ 1992 | BOGAERT. F.L. |

EPO FORM 1503 03.82 (P0403)